# EUROPÄISCHE PATENTANMELDUNG

(11) **EP 2 055 815 A2**
(43) Veröffentlichungstag der Anmeldung: **06.05.2009**
(21) Anmeldenummer: 08016677.0
(22) Anmeldetag: 23.09.2008
(51) Int. Cl.: D01G 27/00, D01G 27/04

(54) **Riemen für Wickelvorrichtung**

(30) Priorität: 31.10.2007 CH 16932007
(71) Anmelder: MASCHINENFABRIK RIETER AG, 8406 Winterthur (CH)
(72) Erfinder: Wymann, Burkhard, 8353 Elgg (CH); Keller, Felix, 9535 Wilen bei Wil (CH)

(57) **Zusammenfassung**

Die Erfindung bezieht sich auf einen Riemen für eine Wickelvorrichtung (1) zur Erzeugung eines Wattewickels (3) bei der die Watte (4) auf einen, von dem umlaufenden, endlosen Riemen (5) angetriebenen, hülsenartigen Kern (10) aufgewickelt wird, wobei der Riemen - im Querschnitt gesehen - mehrere übereinander liegende Schichten (16, 17, 20) aufweist. Zur Herstellung sauberer Ränder des Wattewickels wird vorgeschlagen, dass der Riemen eine erste Schicht (16) mit einer glatten und faserhaftfreien Oberfläche (O) aufweist, auf welcher die Watte (4) beim Wickelvorgang geführt wird und die Seitenränder (21, 21 a, 22, 22a) der weiteren Schicht, bzw. Schichten (17, 20) - über die Riemenbreite (B) und in Richtung zur Riemenmitte (RM) gesehen -jeweils in einem Abstand (b, b1, b2) zu dem jeweiligen Seitenrand (19, 19a) der ersten Schicht verlaufen.

## Beschreibung

Die Erfindung bezieht sich auf einen Riemen für eine Wickelvorrichtung zur Erzeugung eines Wattewickels bei der die Watte auf einen, von einem umlaufenden, endlosen Riemen angetriebenen, hülsenartigen Kern aufgewickelt wird, wobei der Riemen - im Querschnitt gesehen - mehrere übereinander liegende Schichten aufweist.
In der Veröffentlichung der DE-195 39 365 A1 ist eine derartige Wickelvorrichtung zur Herstellung eines Wattewickels beschrieben und gezeigt, wobei der Wattewickel unter Verwendung eines Flachriemens gebildet wird. Dabei ist um eine Hülse, die auf einer stationären Achse drehbar gelagert ist, eine Schlaufe des Riemens gelegt, die sich mit grösser werdendem Wickeldurchmesser in ihrer Grösse anpasst und den Wattewickel am Ende des Wickelvorganges fast vollständig umschlingt. Zur Bildung des Wattewickels wird eine Wattebahn zwischen zwei Umlenkrollen in die Riemenschlaufe eingeführt und an die Hülsenoberfläche übergeben.

Zur Führung der Seitenränder der Wattebahn beim Aufwickelvorgang ist jeweils koaxial zur Hülse eine Seitenscheibe angeordnet, welche die Seitenränder der Wattebahn beim Aufwickeln abstützt und zur Bildung von sauberen Stirnflächen des fertigen Wattewickels beiträgt.

Der zwischen den Wickelscheiben geführte Riemen weist einen Abstand zu den inneren Stirnflächen dieser Wickelscheiben auf. Um das Einklemmen von Fasern aus dem Randbereich der Wattebahn im Spalt zwischen den Riemenrändern und der Seitenscheibe zu verhindern, wurde in der EP-878 568 A2 vorgeschlagen, die seitliche Verschiebung des Riemens während des Wickelvorganges einzuschränken. Dabei wurde vorgeschlagen, den Riemen auf der Seite, welche den Oberflächen der Umlenkrollen zugeneigt ist, mit einer Profilierung (Zahnsegment) zu versehen, welche in Längsrichtung des Riemens verläuft. Diese Profilierung greift dann in ein entsprechendes Gegenprofil der Umlenkrollen ein und verhindert somit eine seitliche Verschiebung des Riemens.

Mit dieser Massnahme wurde erreicht, dass der eingestellte Abstand zwischen den Riemenrändern und den Wickelscheiben annähernd konstant und somit weniger Fasern aus den Randbereichen der Wattebahn herausgezogen wurden, wodurch auch die Verschmutzung des Riemens insbesondere im Randbereich herabgesetzt wurde.

Es hat sich jedoch gezeigt, dass diese Massnahme zwar eine Verbesserung erbrachte, jedoch noch nicht befriedigend war. Da der Riemen bei der Herstellung aus einer grossflächigen Bahn herausgeschnitten wird, entstehen dabei relativ scharfe Kanten beim Übergang von den Seitenrändern zu der Oberfläche des Riemens, auf welcher die Wattebahn beim Aufwickelvorgang geführt wird. Sobald die äusseren Enden der Wattebahn in den Bereich der Wickelscheiben zwischen den Spalt von der jeweiligen Seitenscheibe und dem Seitenrand des Riemens gelangt, wirkt diese scharfe Kante des Riemens als Schnittkante und übt eine Scherwirkung auf die Fasern im Randbereich der Wattebahn aus. Dadurch werden teilweise Fasern aus der Wattebahn herausgezogen, bzw. Fasersegmente herausgeschnitten. Die Folge davon ist die Bildung eines Wattewickels, der über die gesamte Seitenfläche ausgefranste und unsaubere Ränder der aufgewickelten Watte aufweist.
Dies führt einerseits zu Qualitätseinbussen im nachfolgenden Verarbeitungsprozess und erhöht andererseits den Faserverlust und führt ausserdem auch zur Verschmutzung der Maschine. D.h. die Wartungsintervalle zur Reinigung der Maschine müssen in kürzeren Abständen, bzw. häufiger durchgeführt werden. Es wurde deshalb in der DE-103 32 711 A1 vorgeschlagen, die Kanten in den Randbereichen des Riemens zu brechen.

Diese Massnahme erbrachte eine wesentliche Verbesserung. Es hat sich jedoch gezeigt, dass trotz der vorgeschlagenen Massnahmen es immer wieder zu Ablösungen von Fasern in den Randbereichen des Wattewickels gekommen ist. Das Ablösen der Fasern erfolgte insbesondere in dem Bereich, in welchem der Rand der Wattebahn teilweise in den Spalt zwischen dem Riemenrand und den Wickelscheiben gedrückt wird.

Der Erfindung liegt somit die Aufgabe zugrunde, einen Riemen für eine Wickelvorrichtung zur Bildung eines Wattewickels bereitzustellen, welcher die beschriebenen Nachteile vermeidet und die Bildung eines qualitativ hochwertigen Wattewickels gewährleistet und Faserverluste vermeidet.

Diese Aufgabe wird dadurch gelöst, indem vorgeschlagen wird, dass der Riemen eine erste Schicht mit einer glatten und faserhaftfreien Oberfläche aufweist, auf welcher die Watte beim Wickelvorgang geführt wird und die Seitenränder der weiteren Schicht, bzw. Schichten - über die Riemenbreite und in Richtung zur Riemenmitte gesehen - jeweils in einem Abstand zu dem jeweiligen Seitenrand der ersten Schicht verlaufen. Dadurch wird gewährleistet, dass die um einen Betrag zurückgesetzten Ränder der weiteren Schicht, bzw. Schichten nicht in Kontakt mit den teilweise in den Spalt zwischen dem Riemenrand und den Wickelscheiben hineinragenden Rändern der Wattebahn (kurz "Watte" genannt) gelangen können.

Da die weiteren Schichten, im Gegensatz zur ersten Schicht (Watte führenden Schicht), in der Regel rauhere Oberflächen aufweisen, besteht die Gefahr, dass durch die rauhe Oberflächen Fasern aus den Randbereichen der Watte herausgerissen werden, sobald diese mit diesen Schichten in Kontakt treten. Dies wird jedoch durch die vorgeschlagene erfindungsgemässe Ausführung vermieden.
In bezug auf die Anzahl der Schichten ist die Erfindung nicht auf einen Riemen mit nur zwei Schichten beschränkt. Der Riemen könnte z. B. zwei bis fünf Schichten oder sogar bis zu zehn Schichten aufweisen. Massgeblich ist jedoch, dass die Ränder der weiteren Schichten, welche sich an die erste, faserhaftfrei ausgebildete Schicht anschliessen, um einen bestimmten Betrag gegenüber den Rändern der ersten Schicht in Richtung zur Riemenmitte zurückversetzt sind, damit diese nicht in Kontakt mit den Rändern der Wattebahn gelangen.

Vorzugsweise wird vorgeschlagen, dass die jeweiligen Ränder der weiteren Schichten jeweils in einem Abstand zwischen 0,2 mm und 15 mm zum jeweiligen Rand der ersten Schicht verlaufen.

D.h. die Ränder der weiteren Schichten sind gegenüber den Rändern der ersten Schicht um den genannten Betrag in Richtung der Riemenmitte zurückversetzt.

Des Weiteren wird eine Ausführungsform der Erfindung vorgeschlagen, - im Querschnitt des Riemens gesehen - wobei in den Randbereichen des Riemens auf der gegenüberliegenden Seite der Watte führenden ersten Schicht jeweils eine zum Rand des Riemens schräg abfallende Fläche vorgesehen ist, welche durch den jeweiligen Randbereich der ersten und wenigstens einer der benachbarten weiteren Schicht, bzw. Schichten des Riemens verlaufen.
Damit ist es möglich, mit einer Nachbearbeitung einen konventionell hergestellten Riemen auf einfache Weise auf die erfindungsgemäss beanspruchte Ausführung zu verändern, wie dies auch in einem weiteren Verfahrensanspruch beansprucht wird.

In einer weiteren Ausführungsvariante wird vorgeschlagen, dass - im Querschnitt des Riemens gesehen - in den Randbereichen des Riemens die Randbereiche derjenigen Schicht des Riemens, welcher die äussere Begrenzung des Riemens auf der gegenüberliegenden Seite der Watte führenden ersten Schicht bildet, jeweils eine zum Rand des Riemens schräg abfallende Fläche aufweist.

Vorzugsweise verläuft die jeweilige schräge Fläche in bezug auf die sichtbare Oberfläche einer der weiteren Schichten unter einem Winkel zwischen 10° und 60°.

Die Schicht des Riemens (im Patentanspruch als erste Schicht bezeichnet), auf welcher die Watte geführt wird, kann vorzugsweise aus einem faserhaftfreien Kunststoff oder einem Gummigemisch bestehen. Dabei kann diese Schicht zusätzlich mit einer Faserabweisenden Beschichtung versehen sein.
Ebenso ist es denkbar im Randbereich der ersten Schicht, entsprechend dem Vorschlag in der zitierten DE-103 32 711 A1, die Kanten zu brechen (bzw. mit einer Fase zu versehen) um Faserschädigungen zu vermeiden.

Weitere Vorteile der Erfindung werden anhand nachfolgender Ausführungsbeispiele näher aufgezeigt und beschrieben.

Es zeigen:
- Fig.1: eine schematische Seitenansicht einer Wickelvorrichtung mit dem erfindungsgemäss ausgeführten Riemen.
- Fig.2: eine Schnittdarstellung X-X gemäss Fig.1
- Fig.3: eine vergrösserte Teilansicht des Riemenquerschnitts nach Fig. 2 mit einer erfindungsgemässen Ausführung des Riemens
- Fig.4: eine vergrösserte Teilansicht des Riemenquerschnitts nach Fig. 2 mit einer weiteren erfindungsgemässen Ausführung des Riemens
- Fig.4a: eine schematische Darstellung eines Bearbeitungsschrittes zur Herstellung der Ausführung nach Fig.4.
- Fig.5: eine vergrösserte Teilansicht des Riemenquerschnitts nach Fig. 2 mit einer weiteren erfindungsgemässen Ausführung des Riemens.
- Fig.6: ein weiteres Ausführungsbeispiel nach Fig.3 mit einer grösseren Anzahl von Riemenschichten

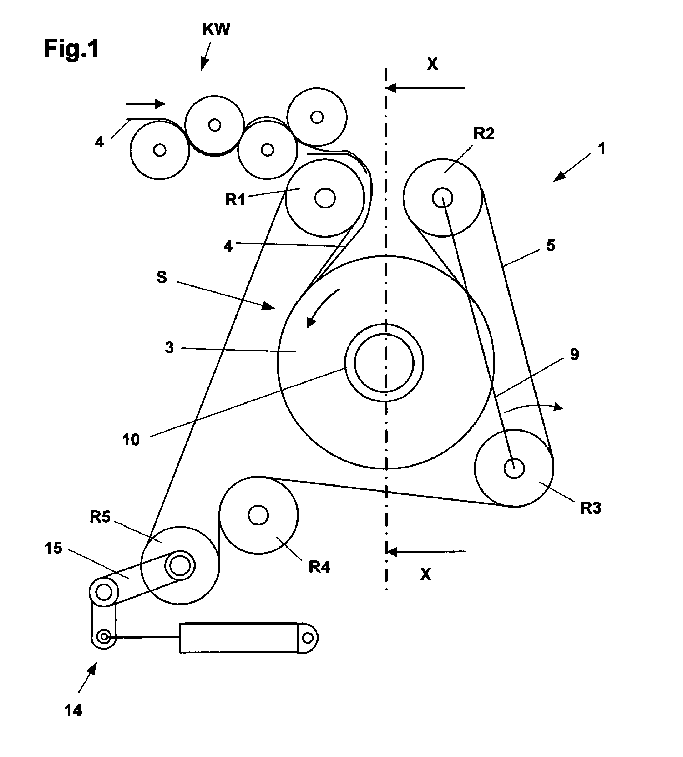

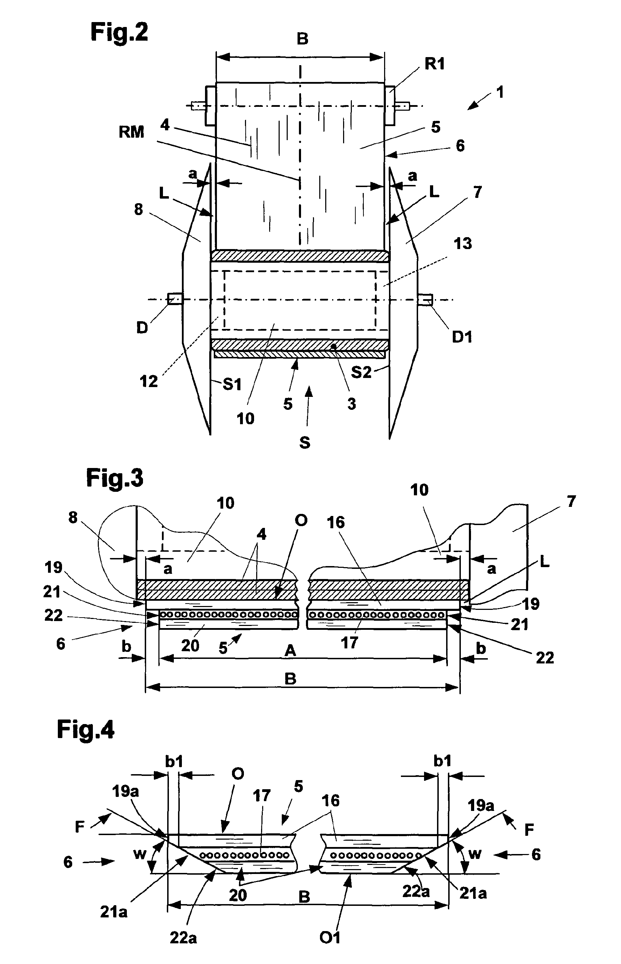

Fig.1 zeigt eine Wickelvorrichtung 1, mit einem Flachriemen 5, der über mehrere Umlenkrollen R1 bis R5 geführt wird. Der Riemen 5 bildet zwischen den Umlenkrollen R1 und R2 eine Schlaufe S, in welcher ein Wickel 3 gebildet wird. Dabei wird während dem Wickelvorgang die über Kalanderwalzen KW in die Schlaufe zugeführte Wattebahn 4 (kurz Watte genannt) auf eine Hülse 10 aufgewickelt. Die Hülse 10 ist stationär zwischen zwei Wickelscheiben 7,8 über Aufnahmen 12 und 13 (siehe Fig. 2) um die Drehachse D, D1 drehbar gelagert.
Bei grösser werdendem Wickel 3 vergrössert sich auch die Schlaufe S. Um den Riemen 5 zu spannen, bzw. die Riemenverlagerung bei grösser werdender Schlaufe S auszugleichen ist eine Spannvorrichtung 14 vorgesehen. Dabei ist die Rolle R5 über einen Arm 15 um eine Schwenkachse schwenkbar gelagert.
Sobald der Wickel 3 seine Endgrösse erreicht hat (über Sensoren ermittelt und überwacht), wird durch Stoppen des Antriebes der Kalanderwalzen KW die Watte 4 im Bereich der Zuführung getrennt. Nach Stillsetzen des Riemenantriebes (eine der Umlenkrollen R1, R4 oder R3 ist mit einem nicht gezeigten Antrieb verbunden) wird die Rolle R2 über den Schwenkarm 9 nach rechts in Pfeilrichtung verschwenkt und im Zusammenwirken mit der Spannvorrichtung nach aussen an eine nicht gezeigte Aufnahme abgegeben. Anschliessend wird nach Zuführung einer neuen Hülse (nicht gezeigt) und Zurückschwenken der Rolle R2 in die in Fig.1 gezeigte Stellung ein neuer Wickelvorgang gestartet. Weitere Details über den Ablauf der Wickelbildung können auch aus der veröffentlichten DE-195 39 365 A1 entnommen werden.

Fig. 2 zeigt einen Schnitt X-X nach Fig.1 der Wickelvorrichtung 1 mit der Umlenkrolle R1, von welcher aus sich die Riemenschlaufe S zur Wickelbildung nach unten erstreckt. Auf dem über die Rolle R1 nach unten umgeleiteten Riemen 5 wird die mit kurzen Strichen schematisch angedeutete Watte 4 in den Umfangsbereich der Hülse 10 überführt. Die Hülse 10 ist an ihrem Aussenumfang mit nicht näher gezeigten Öffnungen versehen, welche mit dem Innenraum der Hülse verbunden sind, an welchen beim Anwickelvorgang ein Unterdruck angelegt (nicht gezeigt) wird. Die Hülse 10 ist über die Aufnahmen 12 und 13 in stationär gelagerten und horizontal verschiebbare Wickelscheiben 7 und 8 geklemmt. Die Wickelscheiben 7, 8 sind über die Achsen D, D1 drehbar gelagert. Wie aus Fig. 2 ersichtlich, wurde bereits eine Wattebahn 4 zur Bildung eines Wattewickels 3 auf die Hülse 10 aufgewickelt. Der Riemen 5 kann auf der von dem Wickel 3 abgewandten Seite z. B. mit einem Zahnprofil (nicht gezeigt) versehen sein, welches in ein entsprechendes Profil der Umlenkrolle R1 eingreift, so dass die seitliche Führung des Riemens 5 in bezug auf die Wickelscheiben 7, 8 gewährleistet ist. Dies ist z. B. aus den Ausführungen der veröffentlichten EP-878 568 A2 zu entnehmen. Dadurch wird im wesentlichen gewährleistet, dass der vorgesehene Abstand a (Spalt L) von den Seitenrändern des Riemens 5 zu den Stirnseiten der Wickelscheiben 7, 8 während des Wickelvorganges konstant bleibt. Lediglich die Breite B der Wattebahn 4 vergrössert sich durch die aufgebrachte Anpresskraft über den Riemen 5, so dass die äusseren Kanten der Wattebahn 4 (wie in Fig. 2 gezeigt) etwa zur Anlage an die inneren Stirnflächen S1, S2 der Wickelscheiben 7, 8 und somit auch in den Bereich der Seitenränder 6 des Riemens 5 gelangen.

Um einen sauberen Wickel 3, insbesondere im Bereich seiner Stirnflächen zu bilden, ist es notwendig, die Abstände a, bzw. den Spalt L möglichst klein zu halten. Durch die hohe Anpresskraft während des Wickelvorganges kann es vorkommen, dass der Rand der Wattebahn (kurz: Watte) teilweise zwischen den Spalt L mit dem Abstand a gelangt. Dadurch kommt der Rand der Watte, bzw. deren Randfasern auch mit den Randbereichen der Riemenschichten in Berührung, welche benachbart zu der Riemenschicht angeordnet sind, auf welcher die Watte beim Wickelvorgang geführt wird. Die Watte führende (erste) Schicht 16 des Riemens 5 ist im wesentlichen faserhaftfrei ausgebildet und mit einer glatten Oberfläche O versehen. Eine glatte und faserhaftfreie Oberfläche weisen auch die Ränder 19 dieser ersten Schicht 16 auf. Die weiteren Schichten 17, 20 sind in der Regel nicht faserhaftfrei ausgebildet, was zum Teil auch durch die Struktur und das Material dieser Schichten gegeben ist. Deshalb können Fasern, welche in den Randbereich dieser weiteren Schichten 17, 20 gelangen, aus dem Wattenrand herausgerissen werden. Um dies zu vermeiden, wird der Riemen 5 erfindungsgemäss ausgebildet, wie in den nachfolgenden Ausführungsbeispielen näher beschrieben und gezeigt wird.

In Fig.3 ist zusätzlich schematisch die Lage der Hülse 10 und zwei Lagen der bereits aufgewickelten Wattebahn 4 angedeutet. Der Riemen 5 ist mehrschichtig ausgebildet und weist beispielsweise eine Zugschicht 16 (erste Schicht) auf, über welche auf die Watte 4 bei der Wickelbildung ein Anpressdruck ausgeübt wird. Die Zugschicht 16 kann z. B. aus einem faserhaftfreien Kunststoff oder einer Gummimischung bestehen. Unterhalb der Zugschicht 16 ist im vorliegenden Beispiel eine Gewebeschicht 17 (zweite Schicht) angebracht, die insbesondere zur Erhöhung der Festigkeit des Riemens vorgesehen ist und als Bindeglied für die Anbringung weiterer Schichten dient. Unterhalb der Gewebeschicht 17 ist eine mit dieser verbundene elastische Schicht 20 (dritte Schicht) z. B. aus Gummi angebracht bzw. aufvulkanisiert. Diese Gummischicht 20 hat aufgrund ihrer Elastizität die Aufgabe, dass der Riemen 5 bei den Umlenkrollen während der Umlenkung gut anliegt und kein Schlupf entsteht.
Es wäre auch möglich noch weitere Schichten als die gezeigten drei Schichten vorzusehen. Die Erfindung ist nicht auf eine Ausführung mit drei Schichten beschränkt. Es können z. B. zwei bis zehn derartiger Riemenschichten vorgesehen sein. Alle Schichten sind mit der jeweils benachbarten Schicht fest verbunden, wie z. B. durch Aufvulkanisieren, über Klebemittel oder weitere Mittel.

Wie aus der Fig. 3 weiter zu entnehmen, weist die Zugschicht 16 eine Breite B auf, welche grösser ist, als die Breite A der darunter liegenden Gewebeschicht 17 und der Gummischicht 20. D. h. die Zugschicht 16 überragt mit ihren Seitenrändern 19 (welche mit dem äusseren Riemenrand 6 zusammenfallen) die Seitenränder 21, 22 der Gewebe- und Gummischicht 17, 20 jeweils um einen Betrag "b". Dadurch wird gewährleistet, dass in dem Spalt L mit der Breite a zwischen den Stirnflächen S1, S2 und den Riemenrändern 6 die Ränder 21, 22 der weiteren Schichten 17, 20 nicht mit den Rändern der Watte, welche in den Spalt L ragen können, in Kontakt kommen. Demzufolge werden auch keine Fasern aus dem Wattenrand durch diese weiteren Schichten herausgezogen und die Herstellung eines Wickels mit sauberen Rändern und ohne Faserverlust gewährleistet.

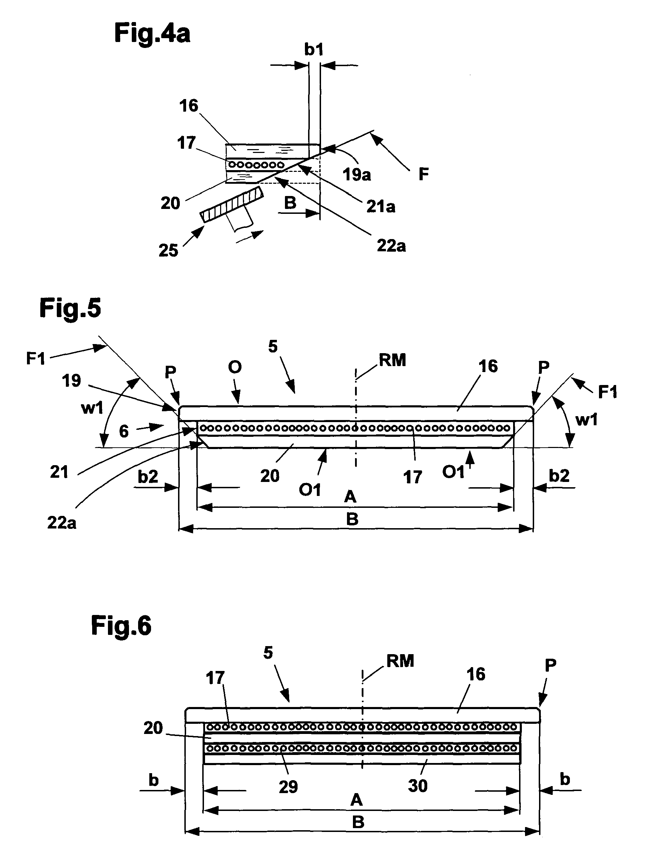

In Fig.4 wird eine weitere Ausführung gezeigt, wobei im Bereich der Riemenränder 6 jeweils eine schräge Fläche F unter einem Winkel w angebracht ist. Dabei ist die jeweilige Fläche F, die im Bereich beider Riemenränder 6 über die gesamte Riemenlänge angebracht ist, so angeordnet, dass sie die Zugschicht 16, die Gewebeschicht 17 und die Gummischicht 20 unter dem Wickel w schneidet. Dadurch sind die Seitenränder 21 a der Gewebeschicht 17, welche jetzt spitz auslaufen, um jeweils einen Betrag b1 gegenüber dem Seitenrand 19a der Zugschicht nach innen in Richtung der Riemenmitte RM zurückversetzt. Die Seitenränder der weiteren Gummischicht 20 sind durch die schräge Fläche F noch weiter von den Seitenrändern 19a entfernt. Auch mit dieser Ausführung wird gewährleistet, dass im Randbereich des Riemens 5 ein Abstand zwischen den Seitenrändern 19a der Zugschicht 16 und den Seitenrändern 21 a, 22a der benachbarten weiteren Schichten 17 und 20 vorhanden ist. Dadurch wird ebenfalls gewährleistet, dass die Seitenränder der Watte, welche in den Spalt L eindringen können, nicht mit den Rändern 21a, 22a der weiteren Schichten 17, 20 in Berührung kommen und somit eine Herausreissen von Fasern aus dem Randbereich der Watte durch diese weiteren Schichten unterbunden wird.
In Fig. 4a wird schematisch ein Verfahren zur Herstellung eines Riemens 5 mit der bereits beschriebenen schrägen Fläche F aufgezeigt. Wie aus der gestrichelten Darstellung zu entnehmen, kann der Riemen in herkömmlicher Weise hergestellt werden, wobei die verschiedenen Schichten (im Beispiel nur drei gezeigt von weiteren möglichen Schichten) deckungsgleich übereinander liegen. Anschliessend wird mit einem schematisch dargestellten und zustellbaren Werkzeug 25 (z. B. Schleifeinrichtung, Fräseinrichtung oder sonstige Einrichtungen) ein Teil der Randschichten der Zugschicht 16, der Gewebeschicht 17 und der Gummischicht 20 abgetragen, wodurch die mit durchgezogenen Strichen gezeichnete Querschnittsform entsteht.
Ein derartiges Herstellungsverfahren wäre natürlich auch zur Herstellung der Ausführung nach Fig.3 möglich.

In Fig. 5 wird eine weitere Ausführungsvariante gezeigt, wobei lediglich bei der unteren Gummischicht 20 die Seitenränder 22a unter einem Winkel w1 in einer schrägen Fläche F1 verlaufen. Die Herstellung dieser schrägen Fläche F1 kann entsprechend der Ausführung nach Fig. 4a erfolgen. Die Seitenränder 21 der weiteren Gewebeschicht 17 mit der Breite A sind jeweils um den Betrag b2 gegenüber den Seitenrändern 19 der Zugschicht 16 in Richtung zur Riemenmitte RM zurückversetzt. Auch mit dieser Ausführung wird gewährleistet, dass die Ränder der Watte 4 nicht mit den Rändern 21, 22a der weiteren Schichten 17, 20 in Kontakt kommen.

In Fig. 6 wird eine Ausführungsvariante eines Riemens 5 gezeigt, bei welcher der Riemen aus fünf miteinander verbundenen Schichten 16, 17, 20, 29 und 30 ausgeführt ist. Die Seitenränder der mit der Zugschicht 16 verbundenen weiteren Schichten 17, 20, 29 und 30 sind entsprechend dem Ausführungsbeispiel nach Fig.3 jeweils um den Betrag b nach innen versetzt, wodurch, wie bereits beschrieben, ein Herausreissen von Fasern aus den Randbereichen der Watte durch diese weiteren Schichten vermieden wird.
Damit keine Fasern durch die Randbereiche der weiteren Schichten aus den Watterändern herausgerissen werden, wäre auch eine Alternative denkbar, wobei über den gesamten Bereich der Seitenränder 6 des Riemens 5 eine faserhaftfreie Beschichtung aufgebracht wird.

Die Erfindung beschränkt sich nicht nur auf den in den Ausführungsbeispielen gezeigten Riemenaufbau, sondern es sind auch weitere möglichen Varianten eines Riemenaufbaues.

## Patentansprüche

1. Riemen für eine Wickelvorrichtung (1) zur Erzeugung eines Wattewickels (3) bei der die Watte (4) auf einen, von einem umlaufenden, endlosen Riemen (5) angetriebenen, hülsenartigen Kern (10) aufgewickelt wird, wobei der Riemen - im Querschnitt gesehen - mehrere übereinander liegende Schichten (16, 17, 20) aufweist, **dadurch gekennzeichnet, dass** der Riemen eine erste Schicht (16) mit einer glatten und faserhaftfreien Oberfläche (O) aufweist, auf welcher die Watte (4) beim Wickelvorgang geführt wird und die Seitenränder (21, 21a, 22, 22a) der weiteren Schicht, bzw. Schichten (17, 20) - über die Riemenbreite (B) und in Richtung zur Riemenmitte (RM) gesehen - jeweils in einem Abstand (b, b1, b2) zu dem jeweiligen Seitenrand (19, 19a) der ersten Schicht verlaufen.

2. Riemen nach Anspruch 1, **dadurch gekennzeichnet, dass** die jeweiligen Seitenränder (21, 21a, 22, 22a) der weiteren Schicht, bzw. Schichten (17, 20) jeweils einen Abstand (b, b1, b2) zwischen 0,2mm und 15 mm zum jeweiligen Seitenrand (19, 19a) der ersten Schicht (16) aufweisen.

3. Riemen nach Anspruch 2, **dadurch gekennzeichnet, dass** - im Querschnitt des Riemens gesehen - in den Randbereichen (6) des Riemens (5) auf der gegenüberliegenden Seite der Watte führenden ersten Schicht (16) jeweils eine zum Rand des Riemens schräg abfallende Fläche (F) vorgesehen ist, welche durch den jeweiligen Randbereich der ersten und wenigstens einer der benachbarten weiteren Schicht, bzw. Schichten (17, 20) des Riemens (5) verläuft.

4. Riemen nach Anspruch 2, **dadurch gekennzeichnet, dass** - im Querschnitt des Riemens gesehen - in den Randbereichen (6) des Riemens (5) die Randbereiche (22a) derjenigen Schicht (20) des Riemens, welcher die äussere Begrenzung des Riemens auf der gegenüberliegenden Seite der Watte führenden ersten Schicht (16) bildet, jeweils eine zum Rand des Riemens schräg abfallende Fläche (F1) aufweist.

5. Riemen nach Anspruch 3 oder 4, **dadurch gekennzeichnet, dass** die jeweilige Fläche (F, F1) in bezug auf die Oberfläche O1 einer der weiteren Schichten (17, 20) unter einem Winkel (w, w1) zwischen 10° und 60° verläuft.

6. Riemen nach einem der Ansprüche 1 bis 5, **dadurch gekennzeichnet, dass** die Watte führende erste Schicht (16) aus einem Kunststoff oder einem Gummigemisch besteht.

7. Verfahren zur Herstellung eines Riemens (5) nach Anspruch 3 **gekennzeichnet durch** folgende Verfahrensschritte:
-- Herstellung eines Riemens mit mindestens zwei unterschiedlichen und aufeinander liegenden Schichten (16, 17, 20), wobei die Schichten - über die Breite (B) des Riemens (5) gesehen - deckungsgleich übereinander gelegt werden
-- Bearbeitung der Randbereiche des Riemens auf der Oberfläche (O1) der Schicht, bzw. der Schichten (17, 20) welche benachbart zur Watte führenden Schicht (16) angeordnet sind
-- Anbringung jeweils einer schräg nach aussen abfallenden Fläche (F) derart, dass die Ränder (21a, 22a) der benachbarten Schichten (17, 20) einen Abstand (b1) zum Seitenrand (19) der ersten Schicht (16), bzw. des Riemens (5) aufweisen.

8. Riemen nach einem der Ansprüche 1 bis 6, **dadurch gekennzeichnet, dass** die Kanten (P) der ersten Schicht (16) beim Übergang des Riemenrandes (19) zur Watte führenden Oberfläche (O) gebrochen sind.

9. Riemen nach einem der Ansprüche 1 bis 6 zur Verwendung bei einer Wattewickelbildenden Maschine.
